Europäisches Patentamt

European Patent Office

Office européen des brevets

(11) Veröffentlichungsnummer: **0 263 931 B1**

(12) **EUROPÄISCHE PATENTSCHRIFT**

(45) Veröffentlichungstag der Patentschrift: **08.09.93**

(51) Int. Cl.⁵: **G01N 21/39**

(21) Anmeldenummer: **87111097.9**

(22) Anmeldetag: **31.07.87**

(54) **Verfahren und Einrichtung zur kontinuierlichen Messung der Konzentration eines Gasbestandteiles.**

(30) Priorität: **04.10.86 DE 3633931**

(43) Veröffentlichungstag der Anmeldung:
**20.04.88 Patentblatt 88/16**

(45) Bekanntmachung des Hinweises auf die
Patenterteilung:
**08.09.93 Patentblatt 93/36**

(84) Benannte Vertragsstaaten:
**AT BE CH DE FR GB IT LI SE**

(56) Entgegenhaltungen:
**EP-A- 0 195 179**
**GB-A- 2 165 640**
**US-A- 3 805 074**

**APPLIED OPTICS, Band 21, Nr. 7, 1. April
1982, Seiten 1185-1190, New York, USA; D.T.
CASSIDY et al.: "Atmospheric pressure monitoring of trace gases using tunable diode
lasers"**

(73) Patentinhaber: **KERNFORSCHUNGSZENTRUM
KARLSRUHE GMBH
Weberstrasse 5 Postfach 3640
D-76050 Karlsruhe(DE)**

(72) Erfinder: **Cerff, Karlheinz
Burgenring 27
D-6744 Kandel(DE)**
Erfinder: **Giraud, Helmut
Falkenweg 3
D-7513 Stutensee-Spöck(DE)**
Erfinder: **Krieg, Günther, Prof. Dr.
Im Rennich 12
D-7500 Karlsruhe 41(DE)**

EP 0 263 931 B1

SOVIET JOURNAL OF OUANTUM ELECTRO-
NICS, Band 14, Nr. 12, Dezember 1984, Seiten
1615-1620, Woodbury, New York, USA; I.I. ZA-
SAVITSKII et al.: "Investigation of the broadening of absorption lines of molecular gases by methods of pulsed laser diode spectroscopy"

JAPANESE JOURNAL OF APPLIED PHYSICS,
Band 20, Nr. 11, November 1981, Seiten
2145-2153, Tokyo, Japan; H. SANO et al.:
"High sensitivity short-path monitoring of
trace gases employing PbSnTe tunable diode laser"

OPTICAL ENGINEERING, Band 23, Nr. 1,
Januar/Februar 1984, Seiten 88-91, Bellingham, Washington, USA; R. POKROWSKY et
al.: "Sensitive detection of hydrogen chloride by derivative spectroscopy with a diode
laser"

TECHNISCHES MESSEN T.M., Jahrgang 52,
Nr. 10, 1985, Seiten 367-371, München,
Deutschland; R. GRISAR et al.:
"Laseroptischer Fluorwasserstoffanalysator"

APPLIED PHYSICS LETTERS, Band 37, Nr. 11,
1. Dezember 1980, Seiten 990-992; R.O. MI-
LES et al.: "Feedback-induced line broadening in cw channel-substrate planar laser
diodes"

**Beschreibung**

Die Erfindung betrifft ein Verfahren zur kontinuierlichen Messung der Konzentration mindestens einer Komponente einer Gasprobe mit einem Laser zur Beaufschlagung der Gasprobe mit Strahlung einer Frequenz im Bereich einer Absorptionslinie der Komponente, mit einer Detektoreinrichtung zur Aufnahme eines der Intensität der transmittierten Strahlung entsprechenden Meßsignals sowie mit einer Auswerteschaltung und Einrichtungen zur Durchführung desselben.

Ein solches Verfahren ist aus der DE-OS 35 10 052 bekannt. Bei diesem Verfahren muß allerdings über eine Temperaturvariation die Absorptionslinie abgestimmt werden und die Messung der Absorption an einer Oberschwingung des aktivierten Moleküls erfolgen.

Eine Vorrichtung zur Durchführung des gattungs gemäßen Verfahrens ist aus dem Soviet Journal of Quantum Electronics, Band 14, Nr. 12, Dezember 1984, S. 1615-1620, New York, USA bekannt. Ein Hinweis auf Modulation mit Hilfe von Lichtrückkopplung findet sich nicht.

Das Problem der kontinuierlichen und selektiven Messung spezifischer Spurengas-Konzentrationen, insbesondere von HF, besteht insbesondere in der Industrie. Es wurden Lösungen versucht, die die Anwendung naßchemischer Analyseverfahren vorsehen, die zwar genaue Analysewerte liefern, aber keine Realzeiterfassung und -steuerung erlauben, oder physikalische Verfahren mit spektral breitbandigen Lichtquellen, die aber keine selektiven Messungen aufgrund der Querempfindlichkeit zu Wasserlinien gestatten, oder letztlich die Laserspektroskopie mit Bleisalz-Diodenlasern vorsehen, die aufgrund der geforderten niedrigen Betriebstemperaturen (15 - 150° K) teure Heliumkühler benötigen.

Die letztgenannten Bleisalzdiodenlaser-Spektrometer sind teuer, da sie aufwendige HE-Kühler benötigen. Zwar handelt es sich beim Bleisalzdiodenlaser um einen Multimodenlaser, er benötigt aber einen zusätzlichen Aufwand (Monochromator) zur Wellenlängenselektion im Strahlengang. Das gleiche gilt für Geräte mit In, Ga, AS/GaAS, die im Zimmertemperaturbereich arbeiten. Sie erfordern ebenfalls einen Monochromator zur Wellenselektion, besitzen ausschließlich Prismen-Strahlteiler zur Aufspaltung in Referenz- und Meßstrahlengang und zur Signalaufbereitung wird ein Mehrkanal-Boxcar-Integratorsystem eingesetzt.

Die der Erfindung gestellte Aufgabe besteht darin, das eingangs genannte Verfahren so zu verbessern, daß mit einem hochselektiven langzeitstabilen Prozeßgas-Meßgerät die kontinuierliche vollautomatisierte Prozeßüberwachung unter industriellen Bedingungen ermöglicht wird.

Die Lösung ist in den kennzeichnenden Merkmalen des Anspruches 1 beschrieben.

Der Anspruch 2 gibt eine Einrichtung zur Durchführung des Verfahrens wieder.

Die Erfindung sieht demnach die Verwendung spezifischer Single-Mode-Laserdioden mit festgelegten spektralen Eigenschaften bei vorgegebenen Betriebsparametern Strom und Temperatur vor. Durch Verringerung der Zahl optischer Komponenten auf ein Minimum werden bei gleichzeitiger thermischer Stabilisierung des Systems thermisch bedingte Signaldriften vermieden. Eine neu entwickelte Auswerteelektronik sieht unter Anwendung einer Nullziehung des nicht absorptionsrelevanten Signalanteils $I_o$ - (Referenzintensität) die Aufspaltung des Signalimpulses in drei Zeitfenster,$I_o^{'}$ (Referenzsignal vor HF-Absorptionssignal),$I_{abs}$ (Absorptionssignal) vor. Mit $I_o^2$ , dem Referenzsignal nach dem HF-Absorptionssignal, wird mit nachfolgender Signalintegration und Mittelung in einstellbaren Zeitschritten die Verwendung eines Boxcar-Integrators überflüssig gemacht. Die Umrechung (Logarithmierung) in Extinktion bzw. Konzentration wird vom angekoppelten Personal-Computer durchgeführt. Die Verwendung faseroptischer Komponenten aus der Nachrichtentechnik zum Aufbau des optischen Systems ist möglich.

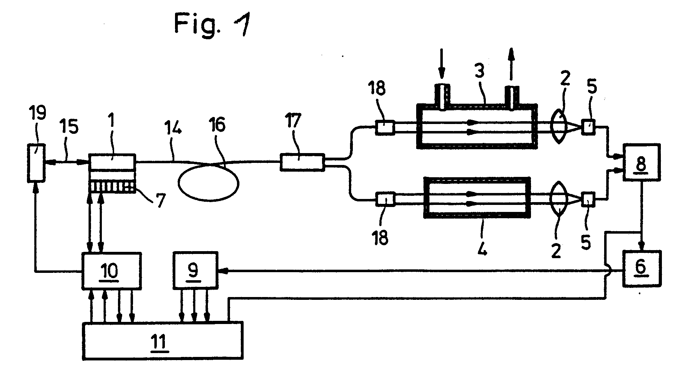

Die Erfindung wird im folgenden anhand zweier Ausführungsbeispiele und der Fig. 1 - 4 näher erläutert.

Die Einrichtung nach den Fig. 1, die der Durchführung des erfindungsgemäßen Verfahrens dient, verfügt in der Hauptsache über einen Single-Mode-Diodenlaser 1, der über eine Absorptionslinie des zu messenden Gases, im vorliegenden Falle HF (Fluorwasserstoff), bezüglich der Wellenlänge periodisch abgestimmt wird. Der Vorteil dieser Laser 1 liegt in der Emission eines longitudinalen Resonatormodes. Die spektrale Halbwertsweite liegt im Bereich 1/10 bis 3 nm je nach Struktur. Die BH-DF-Laser besitzen den Vorteil der einkeuligen Abstrahlcharakteristik im Nahfeld. Die gaußverteilte Intensitätscharakteristik dieser Laserdioden 1 wird durch selektive Anregung des transversalen Grundmodes $TEM_{oo}$ erreicht. Die einkeulige Intensitätsverteilung im Nah- und Fernfeld verringert Nutzsignal-Überlagerungen durch Mehrstrahl-Interferenzen im optischen Strahlengang, wie sie bei Lasern mit komplizierter Abstrahlcharakteristik bei Anregung von Transversalmoden höherer Ordnung auftreten.

Gemäß dem Ausführungsbeispiel nach Fig.1 wird der eine Ausgangsstrahl 14 des Lasers 1 über eine Monomodefaser 16 auf einen Y-Faserkoppler 17 als Strahlteiler gerichtet und von dort aufgeteilt über Miniaturlinsen 18 entweder durch die Meßküvette 3 bzw. die Referenzküvette 4 und Feldlinsen 2 gestrahlt. Die transmittierten Strahlenanteile gelangen über die Detektoren 5 und den Multiplexer 8 auf den Vorverstärker 6 bzw. auf den Systemrechner 11. Dieser Systemrechner 11 besitzt eine AD/DA-Wandlereinheit zur Signalauswertung mit Datenausgabe eine Gerätesteuerung und eine Fehlerdiagnoseeinheit. Die Nullzeihung erfolgt über eine zwischengeschaltete Signal-Nullziehungsschaltung 9 mit Analogausgängen für zwei Signalreferenzkanäle und einen Meßkanal. Die Steuerung des Lasers 1 erfolgt mittels der Lasersteuereinheit 10 sowohl über die Grundthermostatisierung mit dem Peltierelement 7 als auch dem Lichtrückkoppelelement für die Ausgangsstrahlung 13 des zweiten Ausgangs des Lasers 1.

Das Detektionssystem des Ausführungsbeispiels dient der Erfassung der durch das Meßgas spezifisch geschwächten Strahlungsintensität in den Meß- und Referenzgasküvetten 3, 4. Das erhaltene Absorptionssignal wird über Vorverstärker 6 und Multiplexer 8 an die Auswerteeinheit 11 weitergegeben. Die Auswerteeinheit 11 dient der Erfassung der Signalintensität in Meß- und Referenzkanälen. Vor der zeitlichen Integration und gleitenden Mittelwertbildung mit einstellbarem Zeitintervall (R-C-Netzwerk) erfolgt die Abtrennung nicht-absorptionsrelevanter Signalanteile durch die Nullziehungs-Elektronik 9. Die Referenzküvette 4 ist hermetisch versiegelt und hat eine bekannte statische HF-Konzentration.

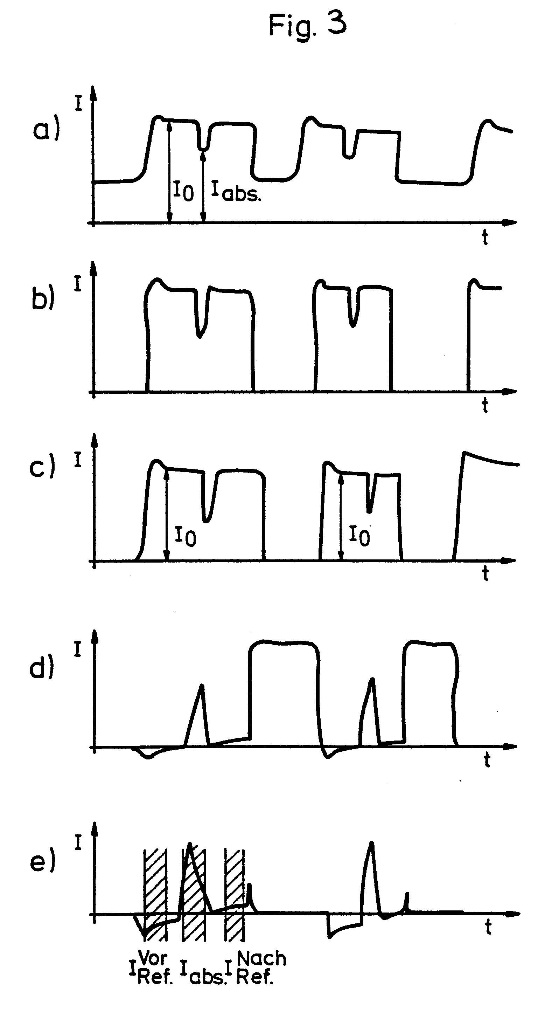

Über die Meßstrecke wird das konzentrationsproportionale Absorptionssignal erfaßt und dient über Soll/Ist-Vergleich zur periodischen Konzentrationseichung des Systems.Über eine vom Systemrechner 11 gesteuerte Regelstrecke 10, 7 bzw. 10, 7 und 19 erfolgt die Nachregelung der Laserabstimmung über der gasspezifischen Absorptionslinie gemäß Fig. 3.

Der Rechner 11 dient auch der Überwachung und Steuerung der Laserbetriebsparameter, der Meßgasparameter sowie zur Berechnung und Ausgabe der Meßgaskonzentration.

Bei Ausführungsform nach Fig. 1 erfolgt die Abstimmung der Wellenlänge des Laserausgangs 14 durch Veränderung der Lichtrückkopplung 19 in den Laserresonator.

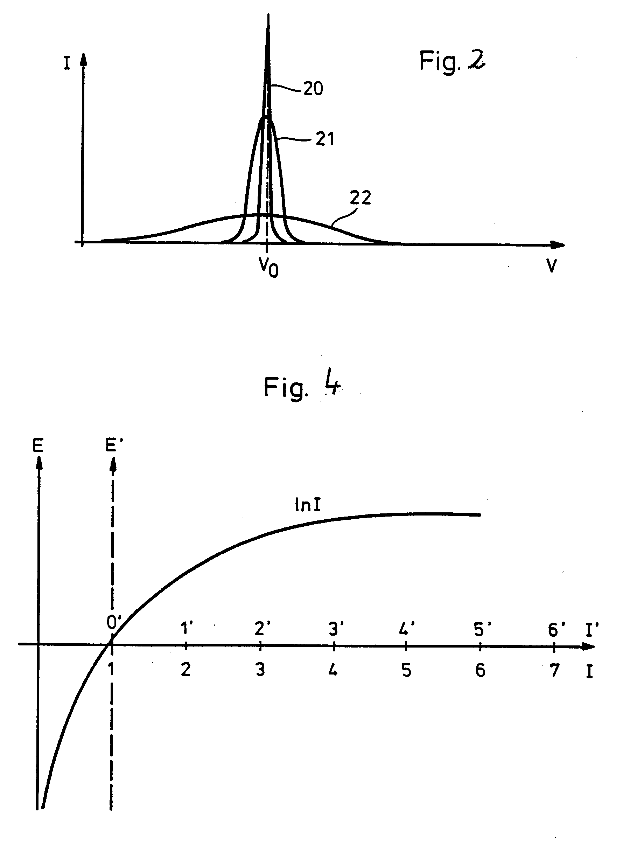

Im Gegensatz zur Abstimmung durch Stromimpulse, bei der eine Abstimmung der Schwerpunktwellenlänge einer Lasermode bei konstanter Halbwertsbreite durch eine zeitliche Variation des Laserstroms und/oder der Lasertemperatur erfolgt, wird durch die Abstimmung über optische Rückkopplung 19 die Frequenzbandbreite (Halbwertsbreite) der Lasermode zyklisch verändert (s. Fig. 2).

Die Schwerpunktswellenlänge bleibt dabei konstant über der Absorptionsmittenwellenlänge 20 ($Y_o$) des zu messenden Gases (HF) abgestimmt, da Laserstrom und Temperatur konstant gehalten werden.

Durch das Lichtrückkoppelelement 19 werden einige Prozent der im zweiten Ausgang 13 des Lasers 1 emittierten Lichtintensität 15 in den Laserresonator zurückgekoppelt. Die Rückkopplung wird periodisch variiert, um eine zeitliche Änderung der spektralen Bandbreite der Lasermode zwischen den Zuständen 21 und 22 zu erreichen. Die Schwerpunktswellenlänge 20 bzw. Frequenz $Y_o$ stimmt mit der des zu messenden Gases überein. Durch die periodische Bandbreitenänderung der Lasermode ergibt sich eine Modulation der Absorptionsintensität an den Detektoren 5.

Für die zeitliche Änderung der Intensität I( + ) gilt die Gleichung (1):

$$I\ (+) \sim \frac{1}{Y_{Laser}^{(t)} + Y_{Gaslinie}} \sim \frac{1}{Y_{Laser}^{(t)}}$$

Bei einer Verbreiterung der Laserlinie um das 40-fache (bei 0,1 % Rückkopplung) fällt die Absorptionsintensität auf ca. 25 % des Ursprungswerts bei unendlich schmaler spektraler Bandbreite des Lasers (Y(t) - Laser = 0). Im Fall Y(t) = $Y_{Gaslinie}$ liegt der Wert bei 5 % der ursprünglichen Intensitätsänderung durch Gasabsorption.

Da die Laserlinie um den Faktor 10-100 schmalbandiger ist als die zu messende Gas-Absorptionslinie, gilt mit guter Näherung für die maximale durch Absorption verursachte Leistungsänderung $\Delta P$ die Gleichung (2):

$$\Delta P \sim \frac{1}{Y_{Gaslinie}}$$

Zur Steigerung der Nachweisempfindlichkeit durch Verbesserung der Signaldynamik bei kleinen Änderungen des Absorptionssignals wird der als Signaloffset auftretende Gleichanteil der Referenzintensität $I_o$ dynamisch erfaßt und durch Addition einer $I_o$ entsprechenden Gegenspannung ($-U_o$) identisch zu Null

gemacht $I'_\alpha = 0$ (Nullziehung). Das Zeitdiagramm für die Impulsformung zeigt Fig. 3a - 3e. Die jeweiligen Aufbereitungsschritte erfolgen in den Stufen der Nullziehungselektronik 9. In Fig. 3a sind die Intensitäten $I_o$ und $I_{abs}$ über der Zeit aufgetragen. Gemäß Fig. 3b ist der Pausenpuls abgezogen. Fig. 3c zeigt die dynamische Scheitelwertmessung von $I_o$ bei jedem Puls. In Fig. 3d ist eine negative Gegenspannung $-U_o$ entsprechend $-I_o$ addiert und eine zusätzliche Signalinversion erfolgt. Fig. 3e zeigt die Signalbereiche

$$I_{Ref}^{vor} \quad ,$$

$I_{abs}$ und

$$I_{Ref}^{Nach}$$

aufgeteilt nach Abtrennung der Pausenpulse.

Beim herkömmlichen Auswerteverfahren wird die aufgrund der spezifischen Gasabsorption auftretende Leistungsänderung $\Delta P$ gemessen und der Extinktionswert nach Gleichung (3) bestimmt:

$$E = \ln(I_o / I_{abs})$$

Für schwache spezifische Gasabsorption unterscheidet sich $I_o/I_{abs}$ wenig von 1, wobei die absoluten Signalgrößen $I_o$ und $I_{abs}$ sehr große Werte annehmen können. Um die Dynamik des nachgeschalteten Auswertesystems 11, insbesondere des Logarithmierers zu verbessern, erfolgt eine Transformation der Signalintensitäten derart, daß $I_o$ stets auf den Nullpegel normiert bleibt (Fig. 4). Dies wird durch die sog. "Nullziehung" des Signals $I_o$ erreicht. Die Nullziehung entspricht einer Transformation der Intensitäten $I$ in $I'$, wobei gilt:

$$I' = I - 1 \qquad mit \qquad I'_o = 0 \quad \underline{und}$$
$$E' = E \qquad\qquad \ln I_o = 0$$

Wird die Extinktion $E$ im "alten" Koordinatensystem durch die gestrichenen Intensitätsgrößen ausgedrückt, folgt nach Gleichung (4):

$$E = \ln \frac{I_o}{I_{abs}} \quad . \qquad\qquad E = \ln \frac{I'_o + 1}{I'_{abs} + 1}$$

Mit $I'_o = 0$ (Nullziehung) folgt:

$$E = \frac{1}{I'_{abs}+1} = \ln 1 - \ln (I'_{abs} + 1)$$

und daraus Gleichung (5):

$$E = \left| -\ln \left( I'_{abs} + 1 \right) \right|$$

als Ausdruck für die Extinktion bei Messung der nullgezogenen Intensitäten. Durch die Beseitigung des in den Integrier- und logarithmierstufen als Offset auftretenden Signalanteils $I_o$ ergibt sich demnach eine Verbesserung der Signalauflösung um den Faktor 100 gegenüber der herkömmlichen Methode.

**Patentansprüche**

1. Verfahren zur kontinuierlichen Messung der Konzentration mindestens einer Komponente einer Gasprobe mit einem Laser zur Beaufschlagung der Gasprobe mit Strahlung einer Frequenz im Bereich einer Absorptionslinie der Komponente, mit einer Detektoreinrichtung zur Aufnahme eines der Intensität der transmittierten Strahlung entsprechenden Meßsignals sowie mit einer Auswerteschaltung, dadurch gekennzeichnet, daß ein Single-Mode-Laser (1) verwendet wird, wobei die Schwerpunktfrequenz des Lasers (1) auf die Schwerpunktfrequenz der gasspezifischen Absorptionslinie abgestimmt wird und dann die Bandbreite des Lasers (1) durch periodische Lichtrückkopplung in den Laserresonator (1) derart moduliert wird, daß mindestens zwei verschiedene Intensitätsmeßwerte der transmittierten Strahlung gewonnen werden, aus denen die Extinktion (E) und somit die Konzentration der Gaskomponente ermittelt wird.

2. Einrichtung zur Durchführung des Verfahrens nach Anspruch 1, welche aus einem Diodenlaser (1), Meß- und Referenzküvette (3, 4), Detektoren (5), mit Verstärkern (6) und einer Auswerteeinheit (11) besteht, dadurch gekennzeichnet, daß der Laser (1) zwei Strahlungsausgänge (12, 13) besitzt, wobei die Ausgangsstrahlung (14) des einen Laserausgangs (12) geteilt (17) und der eine Teilstrahl durch eine Meßküvette (3) und der andere Teilstrahl durch eine Referenzküvette (4) geführt ist, daß die transmittierten Teilstrahlen von Detektoren (5) aufgenommen werden, deren Ausgangssignale über einen Multiplexer (8) und Vorverstärker (6) einer Auswerteschaltung (11) aufgegeben werden, und daß die Ausgangsstrahlung (15) des zweiten Laserausgangs (13) mit Hilfe einer Lichtrückkopplung (19) gesteuert in den Laser (1) rückkoppelbar ist.

**Claims**

1. Technique for continuous measurement by means of a laser of the concentration of at least one component of a gas sample for exposure of the gas sample to radiation of a frequency in the range of an absorption line of the component, together with a detector system for recording a measuring signal corresponding to the intensity of the transmitted radiation, and an evaluation circuit, characterized by use of a single-mode laser (1), with the center of mass frequency of the laser (1) tuned to the center of mass frequency of the gas specific absorption line and the bandwidth of the laser (1) modulated by periodic feedback of the light into the laser resonator (1) in such a manner that at least two different intensity values are measured of the transmitted radiation from which the extinction (E) and hence the concentration of the gas component are determined.

2. Device for application of the technique as claimed in 1, consisting of a diode laser (1), a measurement cuvette (3), and a reference cuvette (4), detectors (5) with amplifiers (6), and an evaluation unit (11), characterized by the laser (1) possessing two beam outlets (12, 13), with the output beam (14) of one laser outlet (12) divided (17) and one partial beam passed through a measuring cuvette (3) and the other partial beam through a reference cuvette (4) in such a manner that the transmitted partial beams are recorded by detectors (5) whose output signals are transmitted to an evaluation circuit (11) via a multiplexer (8) and a preamplifier (6), and with the output beam (15) of the second laser outlet (13) capable of feedback into the laser (1) in a controlled mode using a light feedback system (19).

**Revendications**

1. Procédé pour la mesure en continu de la concentration d'au moins un composant d'un échantillon gazeux avec un laser en soumettant l'échantillon gazeux à un rayonnement d'une fréquence dans la zone d'une raie d'absorption du composant, avec un dispositif détecteur destiné à recevoir un signal de mesure correspondant à l'intensité du rayonnement transmis ainsi qu'avec un montage d'exploitation, caractérisé en ce qu'un laser de mode unique (1) est utilisé, dans lequel la fréquence d'intensité du laser (1) est accordée sur la fréquence d'intensité de la raie d'absorption spécifique du gaz et en suite la longueur de bande du laser (1) est modulée par une ré-injection de lumière périodique dans le résonateur du laser (1) de façon, qu'on obtienne au moins deux valeurs différentes d'intensité du rayonnement transmis, à partir desquelles est déterminée l'extinction (E) et donc la concentration du composant gazeux.

2. Dispositif pour réaliser le procédé selon la revendication 1, qui se compose d'un laser à diodes (1), de cuvettes de mesure et de référence (3, 4), de détecteurs (5), avec des amplificateurs (6) et une unité d'exploitation 11, caractérisé en ce que le laser (1) a deux sorties de rayonnement (12, 13), le rayonnement de sortie (14) d'une des sorties de laser (12) étant divisé (17) et l'un des rayons partiels étant guidé à travers une cuvette de mesure (3) et l'autre rayon partiel à travers une cuvette de référence (4), en ce que les rayons partiels transmis sont absorbés par des détecteurs (5), dont les signaux de sortie sont transmis à travers un multiplexeur (8) et un pré-amplificateur (6) à un circuit d'exploitation (11), et en ce que le rayonnement de sortie (15) de la deuxième sortie du laser (13) est commandé à l'aide d'une ré-injection de lumière (19) et peut être réinjecté dans le laser (1).

# Fig. 1

Fig. 2

Fig. 4

# Fig. 3